# EUROPEAN PATENT APPLICATION

(11) **EP 2 944 407 A1**
(43) Date of publication of application: **18.11.2015**
(21) Application number: 14168681.6
(22) Date of filing: 16.05.2014
(51) Int. Cl.: B23C 5/26, B23B 31/117, B23B 31/40, F16D 1/08

(54) **A fixation arrangement as well as an interchangeable part and a lock key**

(71) Applicant: Sandvik Intellectual Property AB, 811 81 Sandviken (SE)
(72) Inventor: Stjernstedt, Per-Anders, SE-804 27 Gävle (SE)

(57) **Abstract**

The invention relates to a fixation arrangement for attachment of an interchangeable part (1) to a retaining device (2). It comprises a generally circular shaft (7), being attached to or integrated with one of the interchangeable part or the retaining device, and a generally circular mounting hole (4) formed in the other of these two, a rotary preventing means (9, 13) to prevent rotation of the interchangeable part and the retaining device in relation to each other, and an actuator (14) for tightening the interchangeable part and the retaining device towards each other in the direction of a centre axis (3) of the shaft. The fixation arrangement also comprises a sleeve (17), which has a wall thickness that is tapering in a direction of a centre axis of the sleeve, such that an outer envelope surface and/or an inner bore of the sleeve is conically shaped in the direction of its centre axis, and which is formed with at least one slit, as well as a conical portion (4'), which is formed on the inner circumference of the mounting hole (4) and/or on the outer circumference of the shaft. The invention also relates to an interchangeable part as well as a lock key.

## Description

The present invention relates to a fixation arrangement for attachment of an interchangeable part, in form of a machining tool or a workpiece, to a retaining device comprising:
a generally circular shaft, being attached to or integrated with one of the interchangeable part or the retaining device, and a generally circular mounting hole formed in the other of these two;
a rotary preventing means for fixation of the interchangeable part and the retaining device in a tangential direction and prevent rotation of them in relation to each other; and
an actuator for tightening the interchangeable part and the retaining device towards each other in the direction of a centre axis of the shaft.

The invention also relates to an interchangeable part, in form of a machining tool or a workpiece, which is attachable to a retaining device by means of the fixation arrangement.

The invention also relates to a lock key to be inserted into a key way for preventing rotational displacement of an interchangeable part and a retaining device in relation to each other.

### Background of the invention

Within the manufacturing industry of today, precision and dimensional accuracy of the manufactured products has become a crucially important factor. Not at least within the metal machining industry for manufacturing e.g. motor and machine parts, vehicle components, tools and the like. Varying dimensional measures of such items may for example cause misfits, vibrations as well as uneven and rapid wear of the end products.

A common machining technique when manufacturing metal products is to use a rotating machining tool, e.g. a milling tool, which is formed with a centric through mounting hole and which is mounted to a rotatable retainer including a mounting shaft or spindle by inserting the mounting shaft into the mounting hole and attaching the tool to the shaft by means of e.g. a screw or a nut. To prevent rotation of the tool in relation to the shaft during machining, usually a so called lock key is used, which is positioned in a key way composed of key grooves formed in both the retainer, e.g. in the mounting shaft, and the tool, e.g. within the mounting hole of the tool, and will accordingly interlock the retainer and tool and prevent rotation of them in relation to each other. A similar fixation arrangement is also often used to fixate a workpiece to be machined to become a rotatable tool or other mechanical part having a through mounting hole.

However, in order to ensure that the mounting hole of the tool can be positioned onto the shaft and the lock key can be positioned in the key way defined by the two grooves in the shaft and the mounting hole, respectively, the components have to be manufactured with a small deviation in size and within a tolerance range. More precisely, the mounting hole diameter of the tool has to be somewhat larger than the shaft diameter and the width of the key way has to be somewhat larger than the width of the lock key. The size difference and tolerance range is not large, usually in the order of a few hundredths or tenths of a millimetre but inevitably this will have to result that there will be a small radial play between the mounting hole and the shaft as well as between the lock key and the key way. The radial play between the mounting hole and the shaft will result in an eccentric mounting of the tool, which in its turn will lead to e.g. a change of the machining position or depth, uneven wear of the tool and vibrations, which will cause noise and increased wear of the tool as well as of the working machine itself. The play between the lock key and the key way is normally not so deteriorating for the manufacturing result in case of continuous machining operation, although it could cause vibrations. However, in case of fixation of a workpiece by means of a fixation arrangement formed in this way, the machining precision will be deteriorated since the play allows the workpiece to rotate slightly during the machining operation.

Since the size difference and tolerance range are so small, as mentioned above normally in the order of about a few hundredths or tenths of a millimetre, it is often considered to be acceptable. However, in many cases the tolerance deviation can be added in several steps throughout the whole manufacturing process. For example, first a machining tool is manufactured from a workpiece while being mounted in a way as outlined above, which adds a first tolerance deviation to the process. Furthermore, the workpiece is machined by means of a machining tool, which itself has a second tolerance deviation arising from its own manufacturing and is mounted in a similar way which adds a third tolerance deviation. Finally, when the workpiece has been manufactured to a completed machining tool, it is in its turn mounted in the same way when used for machining a product from a workpiece, which consequently will add a fourth tolerance deviation. Accordingly, the maximum tolerance deviation which will affect the manufacturing accuracy of the end product can be four times larger or more, than the initial tolerance deviation.

### Summary of the invention

It is an object of the invention to overcome at least the above mentioned disadvantages associated with prior art. More precisely, according to a first aspect of the invention, it is an object to provide a fixation arrangement for attachment of an interchangeable part to a retaining device, by which any radial play between a circular mounting shaft, of one of the interchangeable part or the retaining device, and a circular mounting hole formed in the other of these two, can be avoided. At least this object is achieved by a fixation arrangement according to claim 1.

The invention also relates to an interchangeable part having essentially the same object as above. At least this object is achieved by an interchangeable part according to claim 9.

According to a second aspect of the invention, it is an object to provide a fixation arrangement according to the above described, by which any rotational play between the interchangeable part and the retaining device can be avoided. At least this object can be achieved by a fixation arrangement according to claim 12.

The invention also relates to a lock key having essentially the same object as above. At least this object is achieved by a lock key according to claim 11.

Accordingly, the basis of the invention is the insight that the object according to the first aspect may be achieved by a fixation arrangement comprising a sleeve, which has a wall thickness that is tapering in a direction of a centre axis of the sleeve, such that an outer envelope surface and/or an inner bore of the sleeve is conical shaped in the direction of its centre axis, and which is formed with at least one slit, which extends along the entire length from one end to another of the sleeve, and/or at least one slit, which extend from one end of the sleeve but are terminated before reaching the opposite end. The fixation arrangement also comprises a conical portion, which is formed on the inner circumference of the mounting hole and/or on the outer circumference of the shaft. When assembling the retainer and the interchangeable part such that the mounting shaft is inserted into the mounting hole, a conical tapering space is defined between the mounting hole and the mounting shaft into which the conical sleeve fits and is forced during tightening of an actuator.

Within the overall idea according to the first aspect of the invention, the fixation arrangement can be varied and modified in many different ways. The invention can be carried out at any application where an interchangeable part, e.g. a machining tool or a workpiece, is to be attached to some form of retaining device, such as a rotating tool holder of a machine or a retaining device for fixation of a workpiece during machining of the workpiece, and where the fixation arrangement comprises a circular shaft which is insertable into a circular mounting hole, which is a through hole and being concentric with a rotation axis of the interchangeable part, for radially fixation, some form of a rotary preventing means for tangentially fixation in the rotational direction, and some form of actuator for axially fixation. Preferably, but not necessarily, the rotary preventing means comprises a lock key which is insertable into a key way commonly formed in the interchangeable part and the retaining device. However, the rotary preventing means could be anything that in a detachable way interconnect the interchangeable part and the retaining device in the tangential direction and accordingly prevent rotation of them in relation to each other, for example one or more bolts, pins or the like inserted into coinciding holes in the interchangeable part and the retaining device.

Normally, the mounting shaft is provided in the retaining device, while the mounting hole is formed in the interchangeable part. This is advantageous since in this way the cost for manufacturing the interchangeable part, which typically is a disposable product, will be lowered. However, it is to be understood that the scope of the invention also covers a fixation arrangement where the mounting shaft is provided on the interchangeable part, whereas the mounting hole is provided in the retaining device.

In the hereinafter described and illustrated exemplary embodiments of the invention, two of the embodiments is provided with a conical sleeve which is conical shaped on its outside, and the corresponding mounting holes in the interchangeable parts are formed with a conical portion, whereas in the third embodiment the conical sleeve is conical shaped on the inside and accordingly the mounting shaft is formed with a conical portion. One advantage with a sleeve being conical shaped on the outside is that in this way existing retaining devices, being provided with a cylindrical mounting shaft, can be used without the need for any reconstruction of the same, since the mounting holes almost solely are formed in the interchangeable part as mentioned above. It is to be noted, however, that the conical sleeve could be conical shaped both on the inside and the outside and, accordingly, both the mounting hole and the mounting shaft have to be provided with a conical shaped portion.

The conical sleeve has to be provided with at least one slit extending from one end of the sleeve towards the other end in order to be flexible and adopt its shape to the conical recess formed between the mounting shaft and the walls of the mounting hole. However it is not necessary that the slit cut through both of the ends of the sleeve. In the hereinafter illustrated embodiments, the conical sleeve of the first and third embodiments is provided with several slits, which extend alternatively from one end and alternatively from the other end but are terminated before reaching the respective opposite ends. The conical sleeve of the third embodiment is also provided with a through slit extending all the way from one end of the sleeve to the other end, whereas the sleeve according to the second embodiment is provided with only one through slit in order to accommodate a lock key and a key way. In the illustrated embodiments, all of the slits extend in parallel to the centre axis of the sleeve. However, this is not a necessary prerequisite. Instead, the slits could also extend in an angle to the centre axis.

In the exemplary embodiments, the actuator for forcing the interchangeable part and retaining device in the axial direction towards each other comprises a threaded bolt or nut. However, the actuator could be formed in any other suitably way, e.g. as a hydraulically or electrically operated actuator. In order to achieve a tight connection without any play in the radial direction between the interchangeable part and the retaining device, it is important that the actuator upon tightening, forces the conical sleeve into the conical space between the mounting shaft and the mounting hole.

A fixation arrangement according to the above described first aspect of the invention comprising a conical sleeve and a conical portion in the mounting hole and/or in the mounting shaft, can be combined with one or more conventional lock keys positioned in one or more key ways. Such a lock key is normally formed as a small rod having a square or rectangular cross section which is attached into a first of the two grooves, which together forms the key way for the lock key, of the interchangeable part and the retaining device to be unrotatably connected to each other. The attachment of the lock key in the first groove can be accomplished by means of for example thermal contraction/expansion, by expansion by means of a screw or the like, or by soldering or welding. Accordingly, the lock key will be rigidly connected to one of the grooves. However, the lock key will be loosely inserted in the other, second groove and accordingly there will be a small play, normally in the order of about a few tenths of a millimetre, between the lock key and the groove and hence also in the rotational direction between the interchangeable part and the retaining device.

However, the object according to the second aspect may be achieved by a novel lock key according to claim 10 and as is described in detail hereinafter. In the described and illustrated exemplary embodiments of the invention two embodiments of a lock key according to the invention are disclosed. However, it is to be understood that a lock key according to the invention can be varied and modified in many different ways within the scope of the claims. For example, the two key parts, which are displaceable in relation to each other while exerting a wedging action in one of the grooves, are in the embodiments completely disconnected from each other apart from being connected by means of a screw. However, they could also be displaceably guided in relation to each other by means of e.g. a dovetail and a dovetail slot or the like.

The first of the hereinafter described and illustrated embodiments of the fixation arrangement is provided with two diametrically opposed positioned lock keys according to the invention. However, one of these lock keys could also be a conventional lock key according to prior art for the purpose of just balancing the rotary machining tool. Moreover, in this embodiment, the key ways are oriented in a radial direction in relation to the rotation axis, whereas in the other two embodiments the key ways are oriented in parallel to the rotation axis. It is to be understood, however, that the key ways could also be oriented in other angles in relation to the rotation axis.

### Brief description of the drawings

Exemplary embodiments of the invention will hereinafter be described by reference to the drawings, in which:
- Fig 1: is a perspective view of an interchangeable part and a retaining device according to a first embodiment of the invention;
- Fig 2: is an exploded perspective view as seen obliquely from above of the embodiment according to Fig. 1;
- Fig 3: is an exploded perspective view as seen obliquely from below of the embodiment according to Figs. 1 and 2;
- Fig 4: is a side view of the embodiment according to Figs. 1-3;
- Fig 5: is a longitudinal section along the line V-V in Fig. 4;
- Fig 6: is a longitudinal section of the mounting shaft, the mounting hole, the conical sleeve and the tightening nut illustrating releasing of the conical sleeve;
- Fig 7: is an exploded perspective view of the lock key according to the first embodiment of the invention;
- Fig 8: is a perspective view of the lock key according to Fig. 7 in an assembled state;
- Fig 9: is a longitudinal section through the key way and the lock key according to Figs. 7-8 along the line IX-IX in Fig. 4 before tightening of the tightening screw;
- Fig 10: is a longitudinal section according to Fig. 9 after tightening of the tightening screw;
- Fig 11: is a longitudinal section through the key way and the lock key according to Figs. 7-8 along the line XI-XI in Fig. 4 during releasing of the lock key;
- Fig 12: is an exploded perspective view of a second embodiment of a lock key according to the invention;
- Fig 13: is a perspective view of the lock key according to Fig. 12 in an assembled state;
- Fig 14: is a partly longitudinal section and a view from above of the lock key according to Figs. 12-13 positioned in a key way;
- Fig 15: is a cross section along the line XV-XV in Fig. 14;
- Fig 16: is a cross section along the line XVI-XVI in Fig. 14;
- Fig 17: is a perspective view of a second embodiment of a fixation arrangement according to the invention comprising a rotatable mounting shaft and a milling disc;
- Fig 18: is an exploded perspective view according to Fig. 17 as seen obliquely from above;
- Fig 19: is a view according to Fig 18 as seen obliquely from beneath;
- Fig 20: is a longitudinal section along line XX-XX in Fig. 17;
- Fig 21: is an exploded view according to Fig. 20;
- Fig 22: is a perspective view of a third embodiment of a fixation arrangement according to the invention comprising a retaining device and a workpiece;
- Fig 23: is an exploded perspective view of the embodiment according to Fig. 22 as seen obliquely from above;
- Fig 24: is a view according to Fig. 23 as seen obliquely from beneath;
- Fig 25: is a view from above of the embodiment according to Fig. 22;
- Fig 26: is a longitudinal section along the line XXVI-XXVI in Fig 25; and
- Fig 27: is an exploded side view of the embodiment according to Figs. 22-26.

### Detailed description of embodiments of the invention

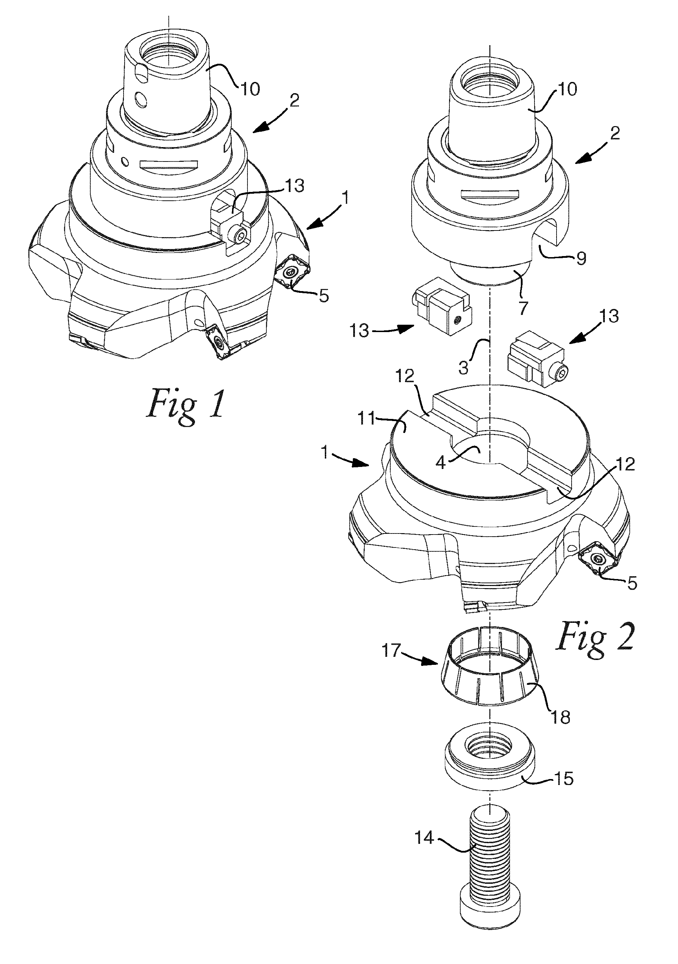

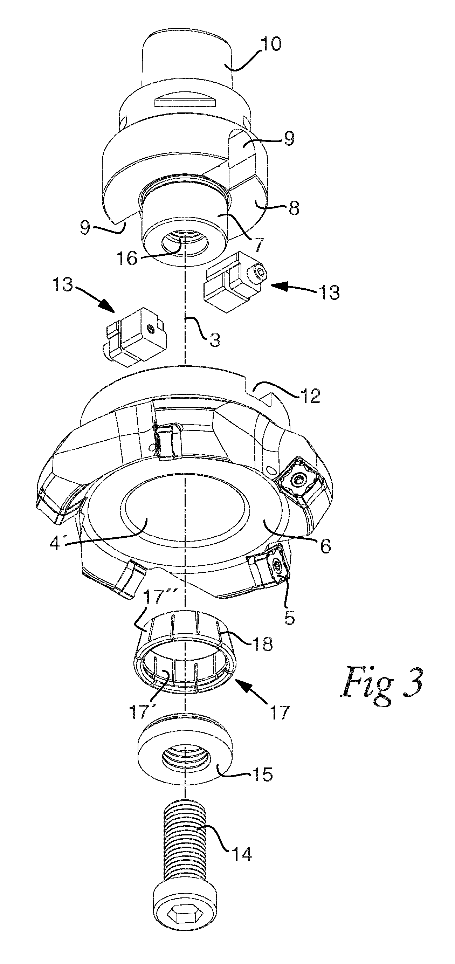

A first embodiment of the invention will hereinafter be described by reference to the Figs. 1-6. The interchangeable part 1 in this embodiment is a rotatable tool in form of a face-milling cutter, which is adapted for flat face milling of a not shown workpiece surface and which is attachable to a rotatable retaining device 2. The tool and the retaining device are rotatable around a common rotation axis 3. The tool comprises a tool body having a circular mounting hole 4, which is a through hole and is concentric with the rotation axis, and a plurality of indexable cutting inserts 5 mounted in seatings close to an end surface 6 of the tool, such that cutting edges of the inserts protrude a small distance beyond the end surface.

The retaining device 2 is in this embodiment in form of an adapter, which in the end to be attached to the tool 1 is provided with a circular mounting shaft 7, a contact surface 8 and two radially extending and diametrically opposed key grooves 9. In the opposite end to be attached to a not shown rotating machine, the adapter is provided with a quick coupling 10, a so called capto-coupling, of a kind disclosed in US 5340248, comprising a conical and hollow shaft having a somewhat "triangular", non-circular cross section, which can be engaged by a not shown pull rod inside the shaft and drawn into a correspondingly shaped hole in the machine.

The tool is also provided with a contact surface 11 in the end to be facing the adapter, which is adapted to bear against the corresponding contact surface 8 of the adapter, and two radially extending and diametrically opposed key grooves 12, which together with the key grooves 9 of the adapter, when the tool and the retainer are assembled such that the key grooves in the retainer and the tool coincide, will form two common key ways for lock keys 13 to be described more in detail below.

When mounting the tool 1 to the retainer 2, the mounting shaft 7 of the retainer is inserted through the mounting hole 4 of the tool and a mounting bolt 14, having a head and a threaded shank, is together with a washer 15 inserted through the mounting hole 4 from the end surface 6 of the tool, whereupon the mounting bolt 14 is threaded into a threaded hole 16 having a centre axis being concentric with the rotation axis 3 in the mounting shaft 7 of the retainer. The washer 15 is positioned between the bolt head and the mounting shaft of the retainer. When tightening the mounting bolt 14, the tool 1 and the retainer 2 will accordingly be drawn together such that the contact surfaces 8, 11 of the tool and the retainer will bear against each other. In this way the tool will be firmly fixated to the retainer in the axial direction.

In order to interconnect the tool 1 and the retainer 2 also in a tangential direction to prevent rotation of them in relation to each other, at least one, and in the disclosed embodiment, two lock keys 13 are arranged in each common key way 9, 12 on opposed sides of the mounting shaft. Normally, a lock key is mounted such that it is fixed mounted in one of the key grooves, e.g. by means of thermal contraction/expansion, soldering, an expander screw or the like and will, when the tool and the retainer are assembled be loosely inserted into the other key groove.

The fastening arrangement between the tool 1 and the retainer 2, described so far, is in all essentials common knowledge for interconnecting a tool and a retainer of this kind, wherein one of them is provided with a mounting hole and the other with a mounting shaft. One problem with such a fastening arrangement is that there will remain a small radial play between the mounting hole of the tool and the mounting shaft of the retainer, since the mounting shaft has to be made with a somewhat smaller diameter than the mounting hole for tolerance purposes in order to ensure problem-free insertion of the shaft into the hole. Another problem is that there will also remain a small tangential play between the tool and the retainer, such that the tool and the retainer can rotate a minor angle in relation to each other. This is due to the fact that the lock key is only loosely inserted in one of the key grooves which inevitably will give rise to a small play.

According to the first aspect of this invention, the first of these problems is in this first embodiment eliminated by that a portion 4' of the mounting hole 4 of the tool 1 is made conical, such that it is tapering from the outer end surface 6 towards the contact surface 11. Furthermore, a conical sleeve 17 having a wall thickness that is tapering in a direction from the outer end surface 6 towards the contact surface 11 is inserted around the mounting shaft 7 and wedged by the washer 15, when tightening of the bolt 14, into the conical space defined by the conical portion 4' of the mounting hole 4 and the mounting shaft 7. More precisely, the conical sleeve 17 is formed such that an inner surface 17' of the same is circular cylindrical having a constant diameter throughout its length, whereas an outer surface 17" of the sleeve is conical shaped with essentially the same conicity or conical angle as the conical shaped portion 4' of the mounting hole. Moreover, the wall of the sleeve is provided with a number of slits 18 in a direction of a centre axis of the sleeve, which in a mounted state of the sleeve coincide with the rotary axis 3 of the tool and the retainer. The slits extend alternately from the inner end and alternately from the outer end of the sleeve but are all terminated before reaching the opposite end. By a sleeve formed in this way the sleeve will be elastic in its circumferential direction and can easily adapt to any differing measures of the mounting shaft or the mounting hole such that the tool can be fixated in relation to the retainer without any axial play there between.

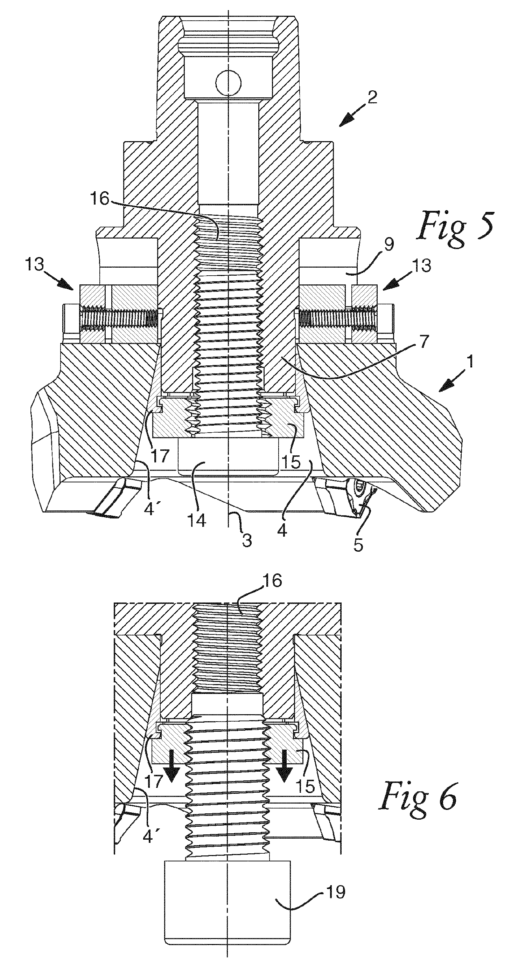

Furthermore, the washer 15 and the sleeve 17 in this embodiment are formed for facilitating retraction of the sleeve from the conical space between the mounting hole and the mounting shaft when releasing the tool 1 from the retainer 2. To achieve this the washer 15, as is best seen from Figs. 5 and 6, is provided with a circumferential groove, which opens outward and perpendicular from its centre axis, whereas the outer end, the thick walled end, of the sleeve 17 is provided with a circumferential flange which is directed perpendicular inward toward its centre axis. In this way the sleeve and the washer can be interconnected by letting the flange be engaged in the groove. Moreover, the washer 15 is provided with a through hole having a somewhat larger diameter than the bolt 14 for mounting the tool to the retainer. The through hole of the washer is furthermore provided with an inner thread, such that when releasing the sleeve from the tool and the retainer, a retraction bolt 19 having a larger size can be threaded into the through hole of the washer, such as is illustrated in Fig. 6, and by continuous screwing of the bolt, the sleeve 17 will be drawn out from the conical space between the mounting hole and the mounting shaft since the end of the bolt shank will brace against the outer end of the mounting shaft.

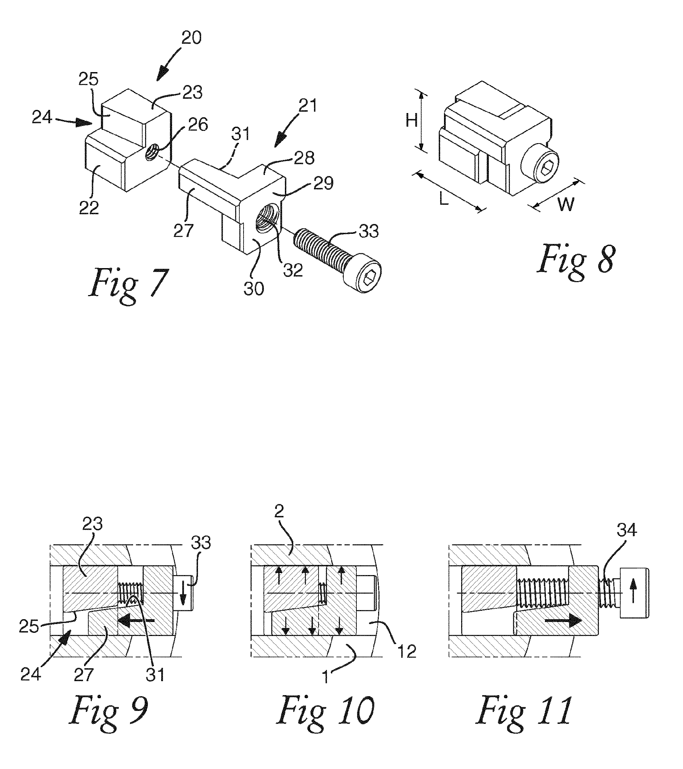

According to the second aspect of the invention, the second of the previously mentioned problems is eliminated by arranging a novel lock key 13 according to the invention in each of the key ways defined by the key grooves 9, 12 in the contact surfaces 8, 11 of the tool and the retainer, respectively. The novel lock key according to a first embodiment of the invention is illustrated in more detail in Figs. 7-11, and as is apparent the lock key comprises two separate key parts which are displaceable in relation to each other. More specifically, the lock key has a length direction L which is adapted to be oriented in a longitudinal direction of a key way, a width direction W perpendicular to the length direction adapted to be oriented in a direction from one side to the other across the longitudinal direction of each key groove forming the key way, and a height direction H perpendicular to the length direction L as well as the width direction W adapted to be oriented in a direction from one key groove towards the other in a key way. The two key parts comprises a base part 20 and a displaceable part 21. The base part is formed with a first portion 22 having a large and essentially uniform width along a part of the height of the base part, and a second portion 23 having a small and varying width along the other part of the height of the base part, such that the base part is formed with a recess 24 extending in the length direction L having an essentially plane sliding surface 25 extending in the height direction H and with a rather small and acute angle in relation to its length direction L. A side surface of the second portion 23 opposed to the sliding surface is in this embodiment flush with the side surface of the first portion 22. A hole 26 having an internal thread is formed in the length direction L from an end surface of the first portion where the recess has its largest width.

The displaceable part 21 is formed with a shank portion 27 having a small height as well as a small width varying in the length direction, and a head portion 28 having a short length with a rather large width along a part 29 of its height dimension and a somewhat smaller width along the other part 30 of its height dimension. An outer side surface of the shank portion is plane and flush with the corresponding side surface of the head portion, whereas an inner side surface forms a plane sliding surface 31 and extends in the height direction H and in an angle in relation to the length direction L such that the shank portion 27 tapers in a length direction L away from the head portion 28. The head portion 28 is formed with a through hole 32 in the length direction L which is generally coinciding with the threaded hole 26 in the base part, when the base part and the displaceable part are assembled, but has a somewhat larger cross sectional dimension than the hole in the base part. The base part and the displaceable part are connectable by means of a screw 33 extending through the holes in the base part and the head portion of the displaceable part and by tightening the screw 33 the base part and the displaceable part can be displaced in relation to each other such that the shank portion 27 slides in the recess 24 of the base part.

The novel lock key according to the invention is adapted to be mounted and function in the following way when mounted in a key way formed of two key grooves 9, 12 in an interchangeable part 1 and a retaining device 2, respectively. Firstly, the base part 20 of the lock key is fixedly mounted with its first portion 22 having the large width in a first of the key grooves 12, e.g. by thermal contraction/expansion. The first portion 22 of the base part should have a height corresponding at least approximately to the depth of the key groove, e.g. the key groove 12 of the interchangeable part 1. Subsequently, the interchangeable part 1 and the retainer 2 are assembled such that the second key groove 9 of the retainer is positioned over and in alignment with the first key groove 12. By tightening the screw 33, as is illustrated in the Figs. 9 and 10, such that the shank portion 27 is displaced inward in the recess 24 of the base part, the overall width of the lock key will gradually increase at the region of the shank portion 27 and the second portion 23 of the base part due to the sliding surfaces 25, 31 of the second portion of the base part and the shank portion which in the illustrated embodiment extend in an angle of about 7° in relation to the length direction L. Accordingly, the shank portion 27 and the second portion 23 of the base part will eventually bear against respective side of the second key groove 9, as is illustrated in Fig. 10, with a force determined by the tightening torque of the screw 33. In this way the lock key according to the invention will fixate the interchangeable part 1 and the retaining device 2 to each other in the rotary direction without any play between them.

One reason why the hole 32 in the head portion of the displaceable part has a slightly larger size than the diameter of the screw 33, is that the displaceable part 21 has to be able to move slightly sideways as the screw is tightened and the head portion 28 approaches the base part 20. For the same reason the portion 30 of the head portion 28 has a somewhat smaller width than the portion 29 since the portion 30 may not abut the side surface of the key groove 12 before the outer side surface of the shank portion 27 abuts against the side surface of the key groove 9. By forming the hole 32 in the head portion with an internal thread it is possible to achieve a further advantage of the inventive lock key, namely to facilitate releasing of the lock key when dismounting the interchangeable 1 part from the retainer 2. More precisely, by unscrewing the tightening screw 33 from the lock key and replace it with a screw 34 having a larger shank diameter and thread it into the hole 32 of the head portion, it is possible to draw the displaceable part 21 out from the key way, as is illustrated in Fig. 11.

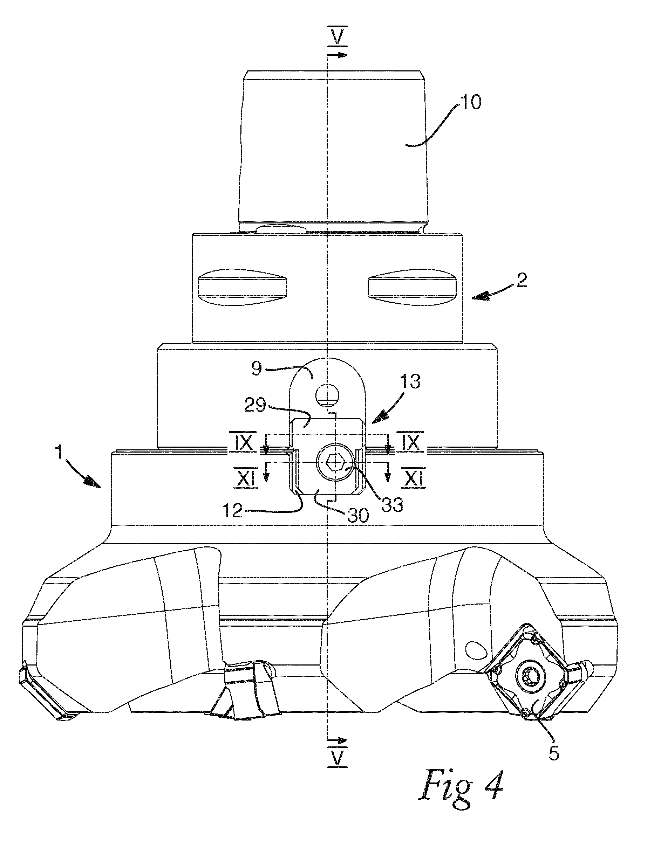

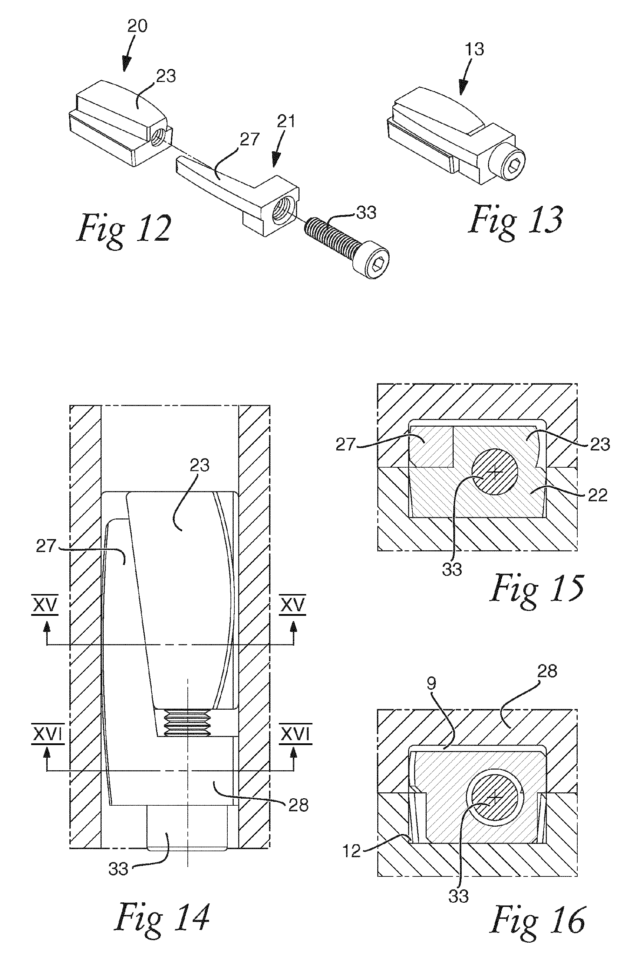

The lock key as described above in relation to the Figs. 4, 5 and 7-11 is essentially formed as a parallelepiped having planar surfaces and mainly right angles between the surfaces, except for some of the angles adjoining to the sliding surfaces. However, in Figs. 12-16 is disclosed a second embodiment of a lock key 13 according to the invention in which the outer side surfaces of the shank portion 27 of the displaceable part 21 and the second portion 23 of the base part 20 are somewhat curved in the length direction as well as in the height direction, as is best seen from Figs. 14-16. Moreover, the opposite side surfaces of the first portion 22 of the base part are diverging in relation to each other in the height direction towards the second portion 23, as is best seen in Fig. 15. The reason why this embodiment of the lock key is provided with contact surfaces, adapted to be in contact with the side surfaces of the respective key grooves 9, 12 forming the key way, formed in this way is to increase the accuracy of the attachment further. Namely, when positioning a lock key according to the invention having strictly plane and parallel side surfaces into a key groove also having strictly plane and parallel side surfaces, there is a risk that the base part might become positioned somewhat angled in relation to the key groove, i.e. the plane side surfaces of the base part is not positioned exactly parallel to the side surfaces of the first key groove. When subsequently tightening the side surfaces of the second portion of the base part and the displaceable part against the side surfaces of the second key groove forces might arise striving to move the interchangeable part and the retaining device apart. The design of the lock key according to this second embodiment helps to avoid this tendency. More precisely, the diverging side surfaces of the first portion of the base part ensure that the base part will assume a stable position within the first key groove since the contact between the side surfaces of the key groove and the side surfaces of the base part will be along straight lines. The contact between the side surfaces of the second portion of the base part and the displaceable part will be more or less in form of point contacts which will ensure that the force between the key groove and the lock key will be directed perpendicular to the side surfaces of the groove such that no lifting effect will arise.

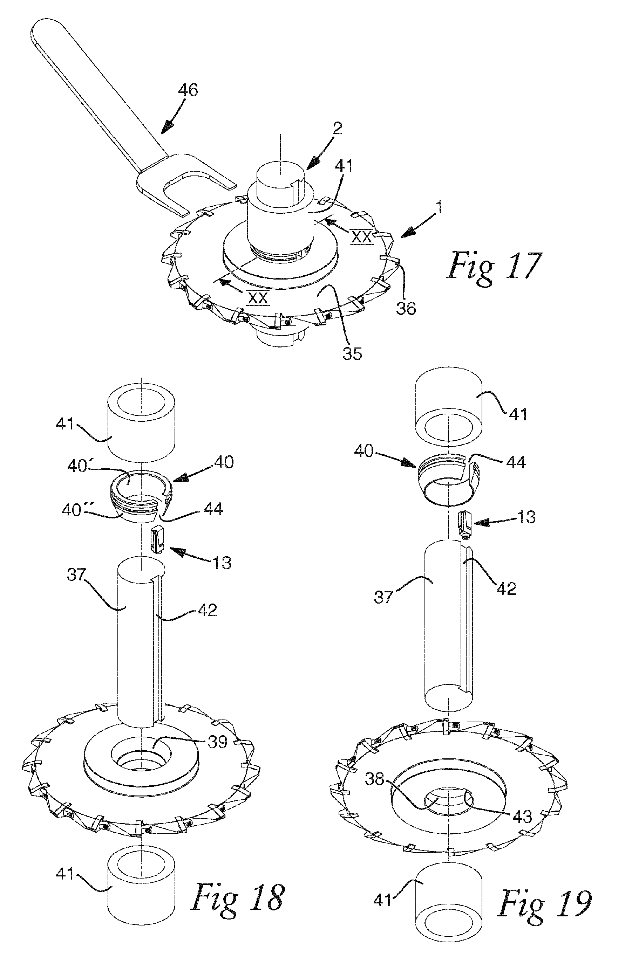

Reference is now made to Figs. 17-21 in which is schematically illustrated a second embodiment of a fixation arrangement for attaching an interchangeable part 1 to a retaining device 2. The interchangeable part 1 in this embodiment is a machining tool in form of a side-milling cutter, comprising a disc 35 on the periphery of which are arranged a plurality of cutting teeth 36 which is mounted onto a retainer 2 comprising a rotatable mounting shaft 37. Also in this embodiment, the tool comprises a circular mounting hole 38, which is formed with a conical portion 39 that is diverging towards an outer surface of the disc. The mounting shaft 37 is cylindrical and inserted into the mounting hole 38. According to the invention, a sleeve 40, having a cylindrical inner bore 40' and a conical shaped outer surface 40", is positioned around the mounting shaft and inserted with its thin wall end into the space defined by the mounting shaft 37 and the conical portion 39 of the mounting hole. The conical sleeve 40 and the tool 1 is forced towards each other by means of two clamping sleeves 41 surrounding the mounting shaft and positioned on each side of the tool. The clamping sleeves 41 can be forced towards the tool 1 and the conical sleeve 40 by means of any appropriate clamping mechanism, which is not shown in the drawings. In this way any radial play between the mounting shaft 37 and the tool 1 can be eliminated.

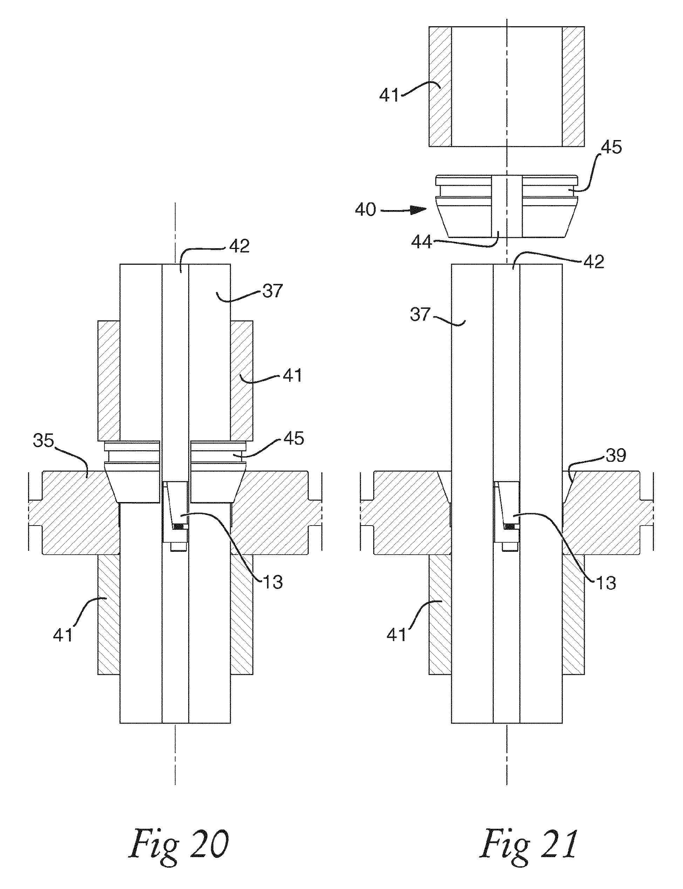

A main difference with this second embodiment compared to the first described embodiment is that a key way for a lock key 13 is formed by a key groove 42 formed in the longitudinal direction of the mounting shaft 37 and a key groove 43 formed in the inner circumferential surface of the mounting hole 38. This has to effect that the conical sleeve 40, the key way 42, 43 and the lock key 13 will interfere. For this reason the conical sleeve 40 is somewhat differently shaped in relation to the first embodiment. Instead of a conical sleeve having several non-continuous slits arranged alternately extending from one end and alternately extending from the other end, as in the previous embodiment, the conical sleeve in this embodiment has only one rather wide and continuous slit 44 from one end to the other. More precisely, the gap of the slit 44 is so wide that the key way 42, 43 and the lock key 13 can be accommodated within the slit, as is best seen in Fig. 20. Due to the slit the conical sleeve 40 can adapt to any varying measures of the mounting hole 38 and/or mounting shaft 37 and provide an attachment without any play. The lock key can preferably be a lock key free from play in the rotary direction according to the invention, as previously described in relation to Figs. 7-16.

In order to facilitate releasing of the conical sleeve 40, it is provided with a circumferential groove 45 opening outwards in the radial direction at its outer end having the largest wall thickness. By means of a yoke formed tool 46, as depicted in Fig. 17, the conical sleeve can easily be drawn out from the conical space defined by the conical portion 39 of the mounting hole and the mounting shaft 37, by inserting the legs of the yoke into the groove 45 on each side of the conical sleeve and draw the sleeve out from the conical space by leverage.

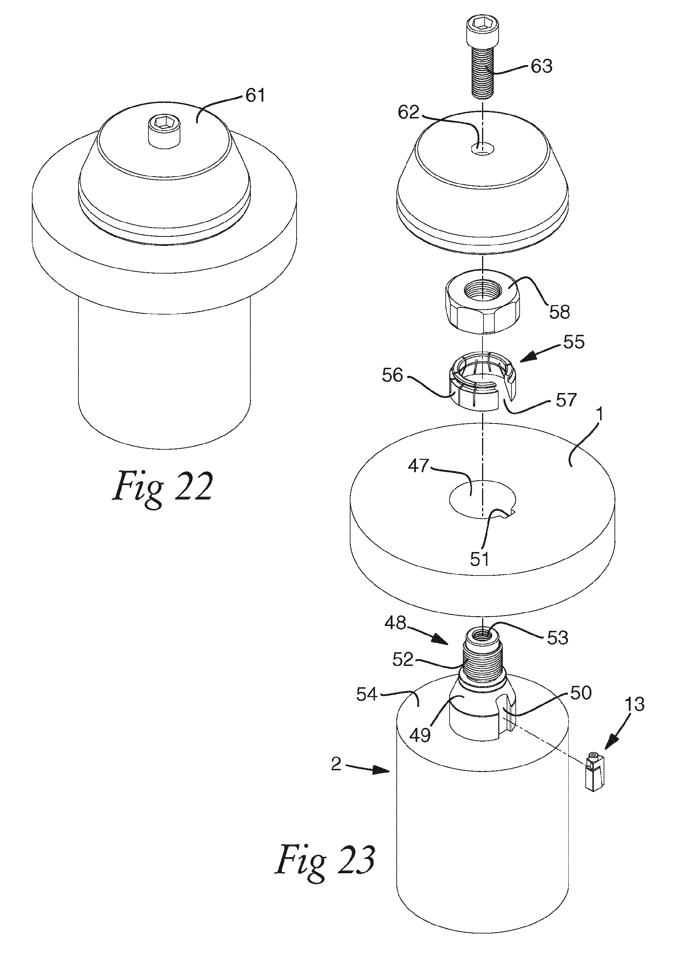

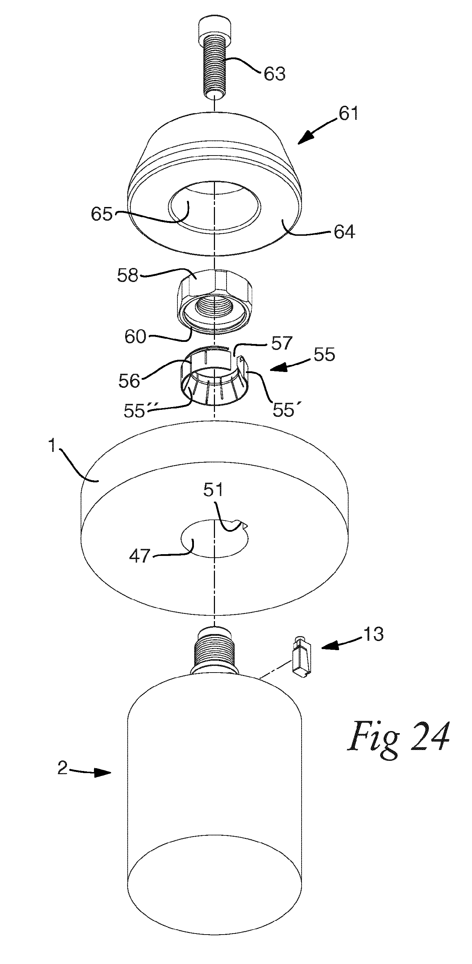

A third embodiment of a fixation arrangement for attachment of an interchangeable part 1 to a retaining device 2 according to the invention is schematically illustrated in Figs. 22-27. In this embodiment the interchangeable part 1 is in form of a workpiece, which is intended to be machined to a product, such as for example a milling tool as described and illustrated in connection with the previous embodiments of the invention. During machining of the workpiece 1 it is fixedly held by the retainer 2, which optionally can be stationary or rotatable to predetermined positions while machining the workpiece to a desired form by means of any arbitrary, not shown machining tool.

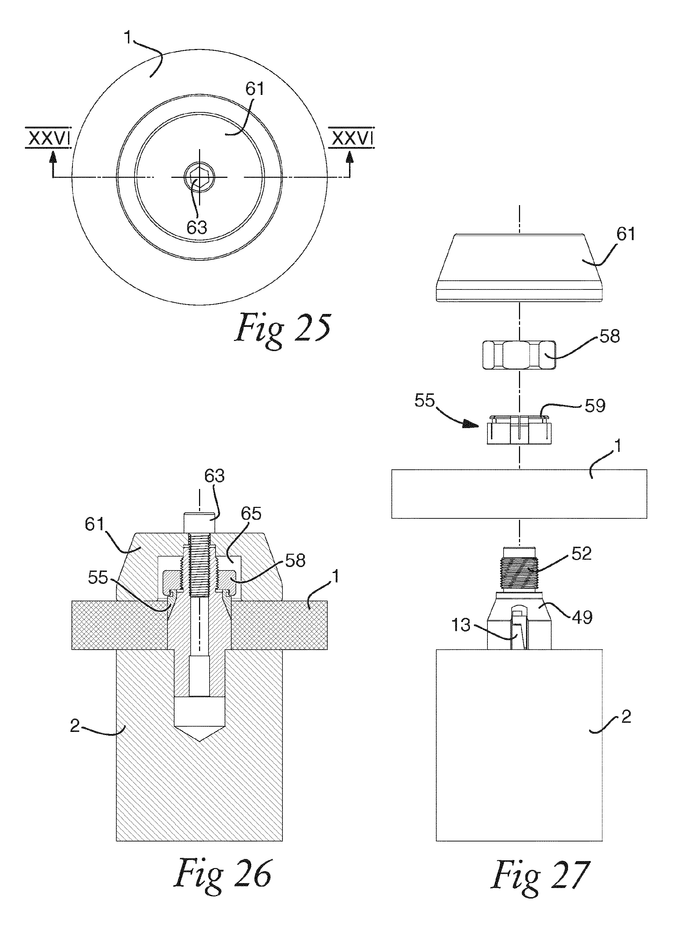

A main difference with this embodiment in relation to the embodiments previously described, is that here the interchangeable part 1 is provided with a mounting hole 47 which is cylindrical, while the retainer 2 has a mounting shaft 48 which is formed with a conical portion 49. A key groove 50, 51 is formed in the mounting shaft 48 and the mounting hole 47, respectively, and an outer end portion of the mounting shaft is provided with an external male thread 52 and an internal female thread inside an axial bore 53 within the shaft. Before mounting the workpiece 1 to the retainer 2, a base part of a lock key 13 according to any of the previously described embodiments according to the invention can preferably be pre-assembled in the key groove 50 of the mounting shaft, e.g. by thermal contraction/expansion. Subsequently, the mounting hole 47 of the workpiece is passed over the mounting shaft 48 such that a side surface of the workpiece will abut a contact surface 54 of the retainer. In this position at least a part of the conical portion 49 of the mounting shaft will be located within the mounting hole 47, as is apparent from the longitudinal section of the assembled retainer and workpiece of Fig. 26. Thereafter, a conical sleeve 55 is inserted into the conical space defined by the mounting hole 47 and the conical portion 49 of the mounting shaft. Since the conical portion 49 in this embodiment is formed on the mounting shaft, the conical sleeve 55 is formed with an essentially cylindrical outer surface 55' while an inner surface 55" is conical shaped such that the wall thickness of the conical sleeve will taper towards one of its ends. Moreover, the conical sleeve 55 in this embodiment is provided with several slits 56 in the axial direction which alternately extend from one end of the sleeve and alternately from the other but are terminated before reaching the opposite end. However, it is also provided with a single through-slit 57 which forms a gap wide enough to accommodate the lock key 13 and the key way 50, 51 in the assembled state. A nut 58 having an internal thread is threaded onto the threaded outer portion 52 of the shaft. When tightening the nut 58 the conical sleeve 55 will be forced into the conical space defined by the mounting hole 47 and the conical portion 49 of the shaft such that the workpiece will be fixated to the shaft of the retainer without any radial play there between. By tightening the displaceable part of the lock key 13 to the base part, the displaceable part will be forced into the key way such that no rotational play will remain between the workpiece and the retainer. In a similar way as in the first embodiment, the outer end of the conical sleeve 55 having the largest wall thickness is provided with a circumferential radially outward directed flange 59, which is in engagement with a groove 60 on the inner circumference of the nut opening in the radial direction. In this way, the nut 58 will draw the conical sleeve 55 out from the conical space between the mounting hole and the mounting shaft when the nut is unscrewed from the shaft.

The fixation arrangement also comprises a dome shaped cover 61, which is provided with a centric hole 62 into which a screw 63 is introduced and threaded into the central hole 53 of the shaft. By tightening the screw 63, a contact surface 64 of the cover will be forced towards a side surface of the workpiece such that the workpiece will be clamped between the contact surface 54 of the retainer and the contact surface 64 of the cover and thereby be securely held during machining of the workpiece. A cylindrical space 65 is defined within the cover in which a portion of the mounting shaft 48, the conical sleeve 55 and the nut 58 are accommodated in the mounted state.

## Claims

1. A fixation arrangement for attachment of an interchangeable part (1), in form of a machining tool or a workpiece, to a retaining device (2) comprising:
a generally circular shaft (7, 37, 48), being attached to or integrated with one of the interchangeable part or the retaining device, and a generally circular mounting hole (4, 38, 47) formed in the other of these two;
a rotary preventing means (9, 12, 13, 42, 43, 50, 51) for fixation of the interchangeable part and the retaining device in a tangential direction and prevent rotation of them in relation to each other; and
an actuator (14, 58) for tightening the interchangeable part and the retaining device towards each other in the direction of a centre axis (3) of the shaft,
**characterized in that** the fixation arrangement also comprises:
a sleeve (17, 40, 55), which has a wall thickness that is tapering in a direction of a centre axis of the sleeve, such that an outer envelope surface and/or an inner bore of the sleeve is conically shaped in the direction of its centre axis, and which is formed with at least one slit (18, 44, 56, 57), which extends along the entire length from one end to another of the sleeve, and/or at least one slit, which extend from one end of the sleeve but are terminated before reaching the opposite end;
as well as a conical portion (4', 39, 49), which is formed on the inner circumference of the mounting hole (4, 38) and/or on the outer circumference of the shaft (48), in which the conical sleeve fits and into which the conical sleeve is forced during tightening of the actuator (14, 58).

2. The fixation arrangement according to claim 1, wherein the interchangeable part is formed with a conical shaped mounting hole and the conical sleeve is conical shaped on its outside.

3. The fixation arrangement according to claim 1 or 2, wherein it comprises a washer having a threaded through hole and is in engagement with the thickest end of the conical sleeve such that the conical sleeve can be withdrawn from the conical space defined by the mounting hole and the mounting shaft by screwing in a bolt into the threaded through hole.

4. The fixation arrangement according to claim 1 or 2, wherein it comprises a threaded nut, which is adapted to be screwed onto a threaded portion of the mounting shaft in order to force the conical sleeve into the conical space defined by the mounting shaft and the mounting hole, and wherein the nut is in engagement with the thickest end of the conical sleeve such that the conical sleeve can be withdrawn from the conical space by unscrewing the nut from the mounting shaft.

5. The fixation arrangement according to any of the preceding claims, wherein the angle between the inner surface and the outer surface of the conical sleeve is between 9-20°.

6. The fixation arrangement according to any of the preceding claims, wherein the width of a slit extending from one end to the other end of a conical sleeve is so large such that it is able to accommodate a lock key.

7. The fixation arrangement according to any of the preceding claims, wherein the retaining device and the interchangeable part is each formed with a contact surface which are adapted to be forced towards each other by tightening of the actuator.

8. The fixation arrangement according to any of the preceding claims, wherein the rotary preventing means comprises at least one groove (9, 12, 42, 43, 50, 51) formed in each of the interchangeable part and the retaining device which grooves, when the interchangeable part and the retaining device are assembled such that the shaft is inserted into the mounting hole, can be brought to coincide for forming a common key way in which a lock key (13) is insertable.

9. An interchangeable part, in form of a machining tool or a workpiece, which is adapted to be attached to a retaining device by means of a fixation arrangement according to any of the preceding claims, wherein the interchangeable part is formed with a circular mounting hole, which is at least partly conical shaped such that the mounting hole has its largest cross-sectional dimension at an end surface thereof and is tapering along at least a part of the distance towards its other end surface.

10. The interchangeable part according to claim 9, wherein the angle of the conical portion of the mounting hole is between 9-20° in relation to its centre axis.

11. A lock key, which is adapted to be positioned in a key way formed by a first key groove in one of an interchangeable part or a retaining device, and a second key groove in the other of these two, wherein the lock key has a length direction (L) adapted to be oriented in a longitudinal direction of the key way, a width direction (W) adapted to be oriented in a direction from one side to the other perpendicular to the longitudinal direction of each key groove, and a height direction (H) adapted to be oriented in a direction from one key groove towards the other perpendicular to the longitudinal direction of the key way, **characterized in that** the lock key comprises two separate key parts, a base part (20) and a displaceable part (21), wherein the base part is formed with a first portion (22) having a large width along a part of the height of the base part, a second portion (23) having a small and varying width along the other part of the height of the base part such that the base part is formed with a recess (24) extending in the length direction and being defined by a sliding surface (25) extending in the height direction and in the length direction with a small and acute angle in relation to the length direction, such that the recess has a tapered width in the length direction, and wherein the base part also is formed with a threaded hole (26) in the length direction from an end surface of the base part where the recess has its largest width, and wherein the displaceable part is formed with a shank portion (27) and a head portion (28), the shank portion extending in the length direction and being formed with a sliding surface (31) extending in the height as well as the length directions with a small and acute angle in relation to the length direction such that it has a tapered width in the length direction, whereas the head portion is formed in the end of the shank portion having the largest width and is formed with a through hole (32) in the length direction which is coinciding with the threaded hole in the base part when the shank portion is positioned in the recess, such that the base part and the displaceable part are interconnectable and adjustable in relation to each other by means of a screw (33), a shank of which being insertable through the hole (32) in the head portion and into the threaded hole (26) in the base part, wherein the hole in the head portion has a larger cross sectional dimension than the cross sectional dimension of the shank of the screw.

12. The lock key according to claim 11, wherein the lock key is mounted in a fixation arrangement according to any of the claims 1-8.

## Amended claims

### Amended claims in accordance with Rule 137(2) EPC.

1. A fixation arrangement for attachment of an interchangeable part (1), in form of a machining tool or a workpiece, to a retaining device (2) comprising:
a generally circular shaft (7, 37, 48), being attached to or integrated with one of the interchangeable part or the retaining device, and a generally circular mounting hole (4, 38, 47) formed in the other of these two;
a rotary preventing means (9, 12, 13, 42, 43, 50, 51) for fixation of the interchangeable part and the retaining device in a tangential direction and prevent rotation of them in relation to each other; and
an actuator (14, 58) for tightening the interchangeable part and the retaining device towards each other in the direction of a centre axis (3) of the shaft,
**characterized in that** the fixation arrangement also comprises:
a sleeve (17, 40, 55), which has a wall thickness that is tapering in a direction of a centre axis of the sleeve, such that an outer envelope surface and/or an inner bore of the sleeve is conically shaped in the direction of its centre axis, and which is formed with at least one slit (18, 44, 56, 57), which extends along the entire length from one end to another of the sleeve, and/or at least one slit, which extend from one end of the sleeve but are terminated before reaching the opposite end;
as well as a conical portion (4', 39, 49), which is formed on the inner circumference of the mounting hole (4, 38) and/or on the outer circumference of the shaft (48), in which the conical sleeve fits and into which the conical sleeve is forced during tightening of the actuator (14, 58).

2. The fixation arrangement according to claim 1, wherein the interchangeable part is formed with a conical shaped mounting hole and the conical sleeve is conical shaped on its outside.

3. The fixation arrangement according to claim 1 or 2, wherein it comprises a washer having a threaded through hole and is in engagement with the thickest end of the conical sleeve such that the conical sleeve can be withdrawn from the conical space defined by the mounting hole and the mounting shaft by screwing in a bolt into the threaded through hole.

4. The fixation arrangement according to claim 1 or 2, wherein it comprises a threaded nut, which is adapted to be screwed onto a threaded portion of the mounting shaft in order to force the conical sleeve into the conical space defined by the mounting shaft and the mounting hole, and wherein the nut is in engagement with the thickest end of the conical sleeve such that the conical sleeve can be withdrawn from the conical space by unscrewing the nut from the mounting shaft.

5. The fixation arrangement according to any of the preceding claims, wherein the angle between the inner surface and the outer surface of the conical sleeve is between 9-20°.

6. The fixation arrangement according to any of the preceding claims, wherein the width of a slit extending from one end to the other end of a conical sleeve is so large such that it is able to accommodate a lock key.

7. The fixation arrangement according to any of the preceding claims, wherein the retaining device and the interchangeable part is each formed with a contact surface which are adapted to be forced towards each other by tightening of the actuator.

8. The fixation arrangement according to any of the preceding claims, wherein the rotary preventing means comprises at least one groove (9, 12, 42, 43, 50, 51) formed in each of the interchangeable part and the retaining device which grooves, when the interchangeable part and the retaining device are assembled such that the shaft is inserted into the mounting hole, can be brought to coincide for forming a common key way in which a lock key (13) is insertable.

9. An interchangeable part, in form of a machining tool or a workpiece, which is adapted to be attached to a retaining device by means of a fixation arrangement according to any of the preceding claims, wherein the interchangeable part is formed with a circular mounting hole, which is at least partly conical shaped such that the mounting hole has its largest cross-sectional dimension at an end surface thereof and is tapering along at least a part of the distance towards its other end surface.

10. The interchangeable part according to claim 9, wherein the angle of the conical portion of the mounting hole is between 9-20° in relation to its centre axis.
